# EUROPÄISCHE PATENTSCHRIFT

(11) **EP 0 750 245 B1**
(45) Veröffentlichungstag und Bekanntmachung des Hinweises auf die Patenterteilung: **09.04.2003**
(21) Anmeldenummer: 96109793.8
(22) Anmeldetag: 18.06.1996
(51) Int. Cl.: G06F 1/16, G06F 15/02

(54) **Stiftorientierter Kleinrechner in Notizblockform**
Pen operated microcomputer having notepad format
Mircoordinateur du type bloc-notes utilisant un stylo

(30) Priorität: 22.06.1995 DE 29510170 U
(43) Veröffentlichungstag der Anmeldung: 27.12.1996
(73) Patentinhaber: SIEMENS AKTIENGESELLSCHAFT, 80333 München (DE)
(72) Erfinder: Loritz, Axel, 82327 Tutzing (DE); Hillenmayer, Stefan, 81371 München (DE)

(56) Entgegenhaltungen:
- EP-A- 0 477 910
- EP-A- 0 604 069
- PATENT ABSTRACTS OF JAPAN vol. 017, no. 107 (P-1496), 4.März 1993 & JP-A-04 295886 (SEIKO EPSON CORP), 20.Oktober 1992, & JP-A-04 295 886 (SEIKO EPSON CORP) 20.Oktober 1992
- PATENT ABSTRACTS OF JAPAN vol. 017, no. 405 (P-1581), 28.Juli 1993 & JP-A-05 073170 (TOSHIBA CORP), 26.März 1993,
- PATENT ABSTRACTS OF JAPAN vol. 96, no. 001 & JP-A-08 022343 (OLYMPUS OPTICAL CO LTD), 23.Januar 1996,
- IBM TECHNICAL DISCLOSURE BULLETIN, Bd. 39, Nr. 3, 1.März 1996, Seiten 251-253, XP000581687 "VIDEO CAMERA ATTACHMENT TO MOBILE COMPUTER"

## Beschreibung

Die Erfindung betrifft einen stiftorientierten Kleinrechner in Notizblockform mit einem mittels eines elektrischen Eingabestiftes bedienbaren Ein-/Ausgabeflachbildschirm, der auf der Deckfläche eines flachen rechteckförmigen Rechnergehäuses innerhalb eines Flachrahmens befestigt ist sowie mit einem mit einer Kante des Rechnergehäuses schwenkbar verbundenen und den Flachbildschirm abdeckenden Klappdeckel.

Die Entwicklung tragbarer Rechner ist von dem an sich naheliegenden Gedanken getragen, die Geräte immer kleiner, leichter und billiger aber auch leistungsfähiger zu machen, was insbesondere durch den rasch fortschreitenden Integrationsgrad bzw. die Packungsdichte integrierter Schaltkreise begünstigt wird. Diese Entwicklung führte von den sogenannten Laptops im Aktenkofferformat zu den sogenannten Notebook-Rechnern, bei denen das die Rechnerbaugruppe samt Tastatur aufnehmende Gehäuse und die in einem Deckel vorgesehene LCD-Anzeige nur noch den Abmessungen eines Notizbuches entsprechen.

Mit den sogenannten Notepads setzt sich dieser Trend weiter fort, wobei die neue Art von tragbaren Kleinrechnern auf die relativ viel Platz beanspruchende Eingabetastatur verzichtet, da hier die Eingabe von Daten und Anweisungen mit Hilfe eines handgeführten Spezialeingabestiftes direkt auf dem Bildschirm erfolgt.

Aus dem Dokument EP-A-0 604 069 ist ein solcher tragbarer Kleinrechner zum Daraufschreiben bekannt. Er weist eine Achse auf, die den Kleinrechner mit einer Abdeckung verbindet. Die Abdeckung ist an der Achse drehbar befestigt, so dass sie auf- und zugeklappt werden kann. Für das Daraufschreiben ist eine spezielle Schreibnadel vorgesehen. Zum Deponieren dieser Schreibnadel an dem Kleinrechner weist dieser an seiner angesprochenen Achse an einer deren Stirnseiten eine Bohrung auf, in die die besagte Schreibnadel einsteckbar ist, bis sie gebraucht wird.

Der besondere Vorteil dieser stiftorientierten Rechnermodule liegt bei der mobilen Datenerfassung, und hier speziell bei Tätigkeiten, die bisher durch das Ankreuzen von Formularen und Erfassungsbögen erledigt werden mußten. Bekannte stiftorientierte Kleingeräte verfügen ferner über genormte Schnittstellen, über die die Verbindung zu verschiedenen Peripheriegeräten oder auch zu zentralen Datenverarbeitungseinheiten hergestellt werden können. Eine unmittelbare Datenverarbeitung und Übertragung vor Ort wäre zwar durchaus zweckmäßig, stößt aber nicht nur wegen des Gewichtes der mitzuführenden Geräte wie z. B. Modem, Drucker oder dergleichen, sondern auch wegen des damit verbundenen Energiebedarfs auf erhebliche Probleme.

Es wurde daher angestrebt, einen stiftorientierten Kleinrechner in Notizblockform, ein sogenanntes Notepad in der Weise zu gestalten, daß über die reine Datenerfassung hinaus auch eine Verarbeitung der Daten und eine Ankopplung an externe Kommunikationssysteme sowie eine Integration weiterer Kommunikationssysteme möglich ist, ohne daß das Gerät hinsichtlich Größe und Gewicht nennenswert beeinträchtigt wird.

Ein derartiges Notepad ist durch das Dokument DE 295 101 70 bekannt. Hierbei ist neben dem Flachbildschirm eine längs einer Kante des Flachrahmens verlaufende, an beiden Seiten am Flachrahmen sich abstützende Führungsleiste vorgesehen. An der Unterseite der Führungsleiste und/oder an dem von der Führungsleiste abgedeckten Bereich des Rechnergehäuses ist eine Scanner- und/oder Druckvorrichtung zur Bearbeitung von über einen seitlichen Eingabeschlitz zuführbare Einzelblätter angeordnet. Ferner ist der der Scanner- und/oder Druckvorrichtung gegenüberliegenden Kante des Rechnergehäuses der den Flachbildschirm abdeckende Klappdeckel schwenkbar befestigt, der derart gestaltet ist, daß er im zugeklappten Zustand bündig und niveaugleich mit der Führungsleiste abschließt. An der Innenseite des Klappdeckels ist eine Solarzellenfläche vorgesehen und an der Bodenfläche des Rechnergehäuses sind wenigstens ein in eine wannenartige bzw. nutartige Aussparung einssteckbarer Akkumulator zur internen Stromversorgung bzw. ein Mobiltelefon lösbar befestigt. Die Integration eines oder mehrerer Peripheriegeräte, insbesondere eines Mobiltelefons in einem stiftorientierten Kleinrechnersystem hat den Vorteil, daß das Gesamtgerät im mobilen Betrieb über die reine Datenverarbeitung hinaus bei Bedarf auch zur Datenverarbeitung und zu Kommunikationszwecken eingesetzt werden kann. Der damit verbundene erhöhte Strombedarf wird durch die im Klappdeckel vorgesehene Solarzellenfläche gedeckt, die den Akku in dieser Hinsicht unterstützt.

Um Ablichtungen von Dokumenten bzw. Personen oder Gegenständen übertragen zu können, soll bei einem derartig gestalteten Notepad zusätzlich eine Videokamera vorgesehen werden. Hierbei wird ebenfalls von der Überlegung ausgegangen, die Videokamera so in das Gerät zu integrieren, daß die äußeren Abmessungen des Notepads nur geringfügig geändert werden.

Diese Aufgabe wird dadurch gelöst, daß die Schwenkachse als rohrförmige Gelenkachse gestaltet ist und zur Halterung einer Videokamera dient.

Durch eine derartige Gestaltung der Schwenkachse als rohrförmige Gelenkachse kann ein Aufnahmeraum für die Videokamera geschaffen werden, dessen Platzbedarf nur minimal ist. Mit den derzeit bekannten relativ kleinen Videokameras können Aufnahmen erstellt werden, die auf drahtlosem Weg übertragen werden können.

Um die Handhabung der Kamera zu optimieren, kann die Videokamera mit einem biegsamen Schwanenhals verbunden sein. Durch diesen Schwanenhals, der im unbenutzten Zustand der Videokamera mit dieser innerhalb der Gelenkachse gehaltert wird, lassen sich beliebige Stellungen der Videokamera realisieren. So kann z. B. die Videokamera so verschwenkt werden, daß bei auf einer Unterlage abgelegtem Notepad der Benutzer abgelichtet werden kann, ohne daß es einer korrigierenden Nachstellung der Kamera bedarf. Weiterhin kann ein aus magnetischem Material bestehender Objektivdeckel zum Einsatz gelangen, der im unbenutzten Zustand das Kameraobjektiv verschließt. Bei Gebrauch der Kamera wird dieser Deckel seitlich an der Kamera befestigt und haftet dort aufgrund seiner magnetischen Eigenschaften.

Die Erfindung soll anhand eines Ausführungsbeispiels näher erläutert werden.

Es zeigt
Figur 1 einen stiftorientierten Kleinrechner, ein sogenanntes Notepad in einer schematisch dargestellten Aufsicht,
Figur 2 das zusammengeklappte Notepad mit teilweise herausgezogener Videokamera,
Figur 3 das aufgeklappte Notepad mit teilweise herausgezogener Videokamera in einer Aufsicht,
Figur 4 das Ausführungsbeispiel nach Figur 3 in einer Ansicht von oben,
Figur 5 das aufgeklappte Notepad mit abgebogener Videokamera,
Figur 6 eine erste Möglichkeit zur Nutzung der Videokamera bei Dokumenten,
Figur 7 eine weitere Möglichkeit bei der Ausrichtung der Kamera auf einen Benutzer.

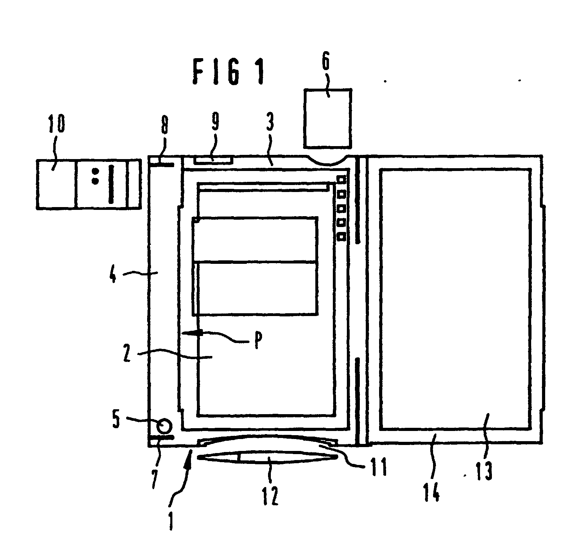

Die Figur 1 zeigt einen stiftorientierten Kleinrechner in schematisch dargestellter Aufsicht. Dieses Notepad besteht aus einem rechteckförmigen Rechnergehäuse 1, auf dessen Deckfläche ein Flüssigkristallflachbildschirm 2 innerhalb eines Flachrahmens 3 befestigt ist. Seitlich neben dem Flachbildschirm ist eine längs der linken Kante des Flachrahmens 3 verlaufende, an beiden Enden am Flachrahmen sich abstützende Führungsleiste 4 vorgesehen. Im Bereich dieser Führungsleiste 4 sind eine Scanner- und/oder Druckvorrichtung (in der Figur nicht sichtbar) angeordnet, denen über einen seitlichen Eingabeschlitz (siehe Pfeil P) die jeweils abzutastenden bzw. zu bedruckenden Einzelblätter, z. B. in DIN A4 Format, zugeführt werden. Die optoelektrische Abtasteinrichtung für die Scannervorrichtung befindet sich zweckmäßig an der Unterseite der Führungsleiste, wahrend die Druckvorrichtung, ebenso wie die Antriebsmittel für den Papiertransport, gegenüberliegend im Rechnergehäuse 1 untergebracht werden. Auf der Oberseite der Führungsleiste 4 ist ferner ein Ein-/Ausschalter 5 vorgesehen, der vorzugsweise als Drucktastenschalter ausgebildet ist und in dessen Tastenkopf ein optischer Abtastkopf zur Fingerabdruckabtastung als Zugangskontrolle zum Rechnersystem vorgesehen werden kann. Die eigentliche Zugangskontrolle erfolgt über eine Chipkarte 6, deren zugehöriger Kartenleser, in der Figur durch einen Karteneingabeschlitz angedeutet, im Rechnergehäuse 1 integriert ist. In der Führungsleiste 4 sind ferner ein Mikrofon 7 und ein Lautsprecher 8 zur Spracheingabe und zur Sprachausgabe eingebaut. Am oberen Rand des Rechnergehäuses 1 ist darüber hinaus eine Infrarotsendeund/oder Empfangseinrichtung 9 zur drahtlosen Datenübertragung integriert. Als weiteres Kommunikationsmittel ist ein Mobiltelefon 10 vorgesehen, das an der Bodenfläche des Rechnergehauses 1 in eine dort vorgesehene nutartige Aussparung seitlich einschiebbar ist. Am unteren Rand des Flachrahmens 3 ist eine muldenartige Aufnahmevorrichtung 11 vorgesehen, in der der zur Dateneingabe auf dem Flachbildschirm 2 bestimmte Eingabestift 12 an beiden Enden durch schlitzartige Klemmelemente gehalten ist.

An der Bodenfläche des Rechnergehäuses ist eine weitere wannenartige Aussparung (in der Zeichnung nicht sichtbar) zur Aufnahme eines Akkus für die Stromversorgung des Notepads und der im Notepad integrierten Komponenten vorhanden. Zur Unterstützung des Akkus dient eine Solarzellenfläche 13, die an der Innenfläche eines am Rechnergehäuse 1 schwenkbar gelagerten Klappdeckels 14 befestigt ist. Dieser Klappdeckel 14 ist an der der Führungsleiste 4 gegenüberliegenden Längskante des Rechnergehäuses befestigt und dient im zusammengeklappten Zustand als mechanischer Schutz für den Flachbildschirm 2. Der Klappdeckel 14 ist im übrigen so gestaltet, daß er im zugeklappten Zustand bündig und niveaugleich zur Führungsleiste 4 aufliegt.

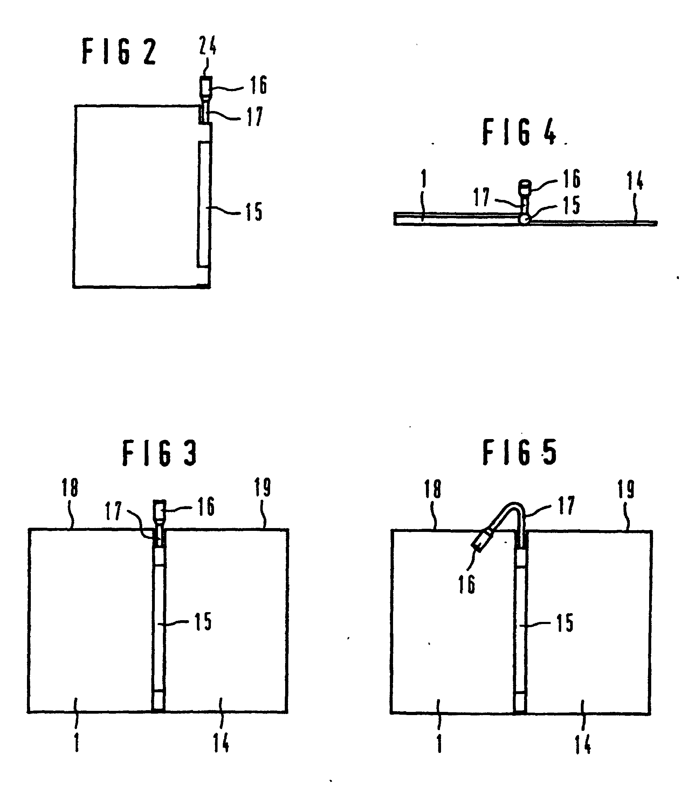

Das Rechnergehäuse 1 ist mit dem Klappdeckel 14 über eine Gelenkachse 15 verbunden. Diese rohrförmige Gelenkachse dient zur Halterung einer Videokamera 16. In Figur 2 ist die Videokamera 16 teilweise aus der Gelenkachse herausgezogen. Mit der Videokamera ist ein Schwanenhals 17 verbunden, durch den beliebige Einstellungen der Videokamera 16 möglich sind. Die Videokamera 16 wird im eingeschobenen Zustand, in dem sie bündig mit den benachbarten Kanten 18 und 19 des Rechnergehäuses 1 und des Klappdeckels 18 abschließt, durch einen magnetische Eigenschaften aufweisenden Objektivdeckel 24 verschlossen. Im Betrieb wird dieser Objektivdeckel 24 seitlich an der Videokamera 16 angebracht und haftet dort.

In den Figuren 3 und 4 ist die Videokamera schräg zur Notepadfläche herausgezogen, während sie in Figur 5 abgebogen ist.

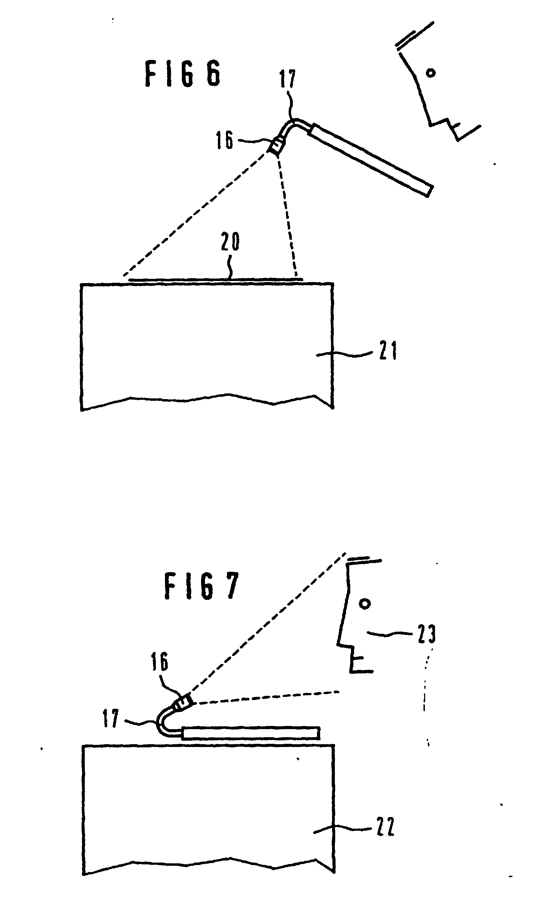

Wie aus Figur 6 ersehen werden kann, lassen sich durch eine etwa senkrecht zur Notepadfläche abgebogene Videokamera auf einer Unterlage 21 befindliche Dokumente 20 abfilmen. Bei auf einer Unterlage 22 aufliegendem Notepad kann der Schwanenhals 17 so abgebogen werden, daß der Benutzer 23 optimal erfaßt wird.

## Patentansprüche

1. Stiftorientierter Kleinrechner in Notizblockform mit einem mittels eines elektrischen Eingabestiftes (12) bedienbaren Ein-/Ausgabeflachbildschirm (2), der auf der Deckflache eines flachen, rechteckförmigen Rechnergehäuses (1) innerhalb eines Flachrahmens (3) befestigt ist sowie mit einem mit einer Kante des Rechnergehäuses (1) schwenkbar verbundenen und dem Flachbildschirm (2) abdeckenden Klappdeckel (14), **dadurch gekennzeichnet, daß** die Schwenkachse als rohrförmige Gelenkachse (15) gestaltet ist und zur Halterung einer Videokamera (16) dient.

2. Kleinrechner nach Anspruch 1, **dadurch gekennzeichnet, daß** mit der Videokamera (16) ein biegsamer Schwanenhals (17) verbunden ist.

3. Kleinrechner nach Anspruch 1, **dadurch gekennzeichnet, daß** die Videokamera (16) im unbenutzten Zustand durch einen Objektivdeckel (24) aus magnetischem Material verschlossen ist.

## Claims

1. Stylus-oriented small computer in notepad form having an input/output flat screen (2) which can be operated using an electrical input stylus (12) and is mounted on the top of a flat, rectangular computer housing (1) within a flat frame (3) and also having a hinged cover (14) which is pivotably connected to one edge of the computer housing (1) and covers the flat screen (2), **characterized in that** the pivot axis is in the form of a tubular hinge axis (15) and is used to hold a video camera (16).

2. Small computer according to Claim 1, **characterized in that** a flexible gooseneck (17) is connected to the video camera (16).

3. Small computer according to Claim 1, **characterized in that**, when it is not being used, the video camera (16) is capped by a lens cap (24) made of magnetic material.

## Revendications

1. Microordinateur du type bloc-notes utilisant un stylo, avec un écran plat d'entrée-sortie (2) utilisable au moyen d'un stylo d'entrée électrique (12) et fixé sur la surface de recouvrement d'un boîtier d'ordinateur (1) plat rectangulaire, à l'intérieur d'un cadre plat (3), ainsi qu'avec un couvercle rabattant (14) relié de façon pivotante à un bord du boîtier d'ordinateur (1) et recouvrant l'écran plat (2), **caractérisé en ce que** l'axe de pivotement se présente sous forme d'axe articulé (15) tubulaire et sert à la fixation d'une caméra vidéo (16).

2. Microordinateur selon la revendication 1, **caractérisé en ce que** la caméra vidéo (16) est reliée à un col de cygne (17) flexible.

3. Microordinateur selon la revendication 1, **caractérisé en ce que** la caméra vidéo (16), lorsqu'elle n'est pas utilisée, est obturée par un couvercle d'objectif (24) en matière magnétique.
